# EUROPEAN PATENT APPLICATION

(11) **EP 4 650 143 A1**
(43) Date of publication of application: **19.11.2025**
(21) Application number: 25176144.1
(22) Date of filing: 13.05.2025
(51) Int. Cl.: B29C 45/76

(54) **MOLDING MACHINE COMPRISING A CONTROL DEVICE CONFIGURED TO CAUSE A DISPLAY DEVICE TO DISPLAY A CHANGE INFORMATION ENTITY SCREEN**

(30) Priority: 14.05.2024 JP 2024078556
(71) Applicant: Toyo Innovex Co., Ltd., Akashi-shi, Hyogo (JP)
(72) Inventor: SAWADA, Yasutake, Akashi-shi, Hyogo (JP); OKA, Masaaki, Akashi-shi, Hyogo (JP)
(74) Representative: Pintz, György

(57) **Abstract**

An injection molding machine, includes: a storage device (73) configured to store change information entities related to a plurality of items included in a molding condition; a display device (71) configured to display a set screen for setting a set value to at least one item of the plurality of items; an input device (72) configured to input an item selection operation to select one item from the items in the set screen displayed on the display device (71); and a control device (78) configured to cause the display device (71) to display an item setting history screen including a change information entity display section to display only the change information entity related to the item selected by the item selection operation superimposed on the set screen.

## Description

### BACKGROUND OF THE INVENTION

### Field of the Invention

The present invention relates to a molding machine.

### Description of the Related Art

PTL 1 discloses an example of injection molding machines in the past. Such an injection molding machine operates in accordance with molding conditions to form molded articles. The molding conditions include set values to be set to items (speed, pressure, temperature, time, moving distance, etc.) related to driving of each driving section of the injection molding machine. The injection molding machine has a screen (set screen) for setting the set values.

PTL 1 refers to JP 2016-159481 A.

### SUMMARY OF THE INVENTION

For example, when a mold is replaced with a new one in the injection molding machine, an operator conducts condition setting work using the injection molding machine. In the condition setting work, prototype molded articles are molded by adjusting the set values until molded articles meeting the requirements specification are successfully molded. The molding conditions obtained by the condition setting work are used for molded articles to be final products.

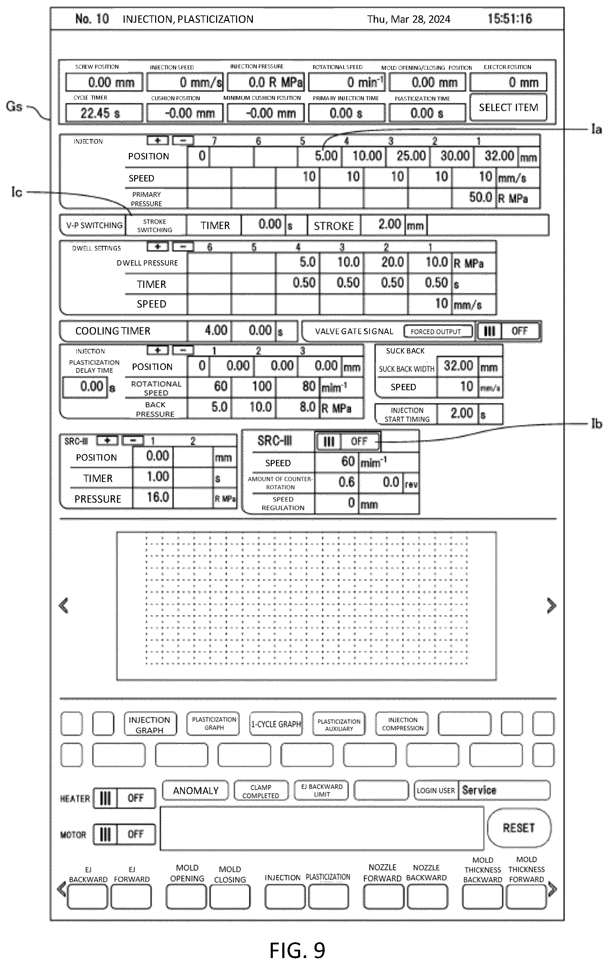

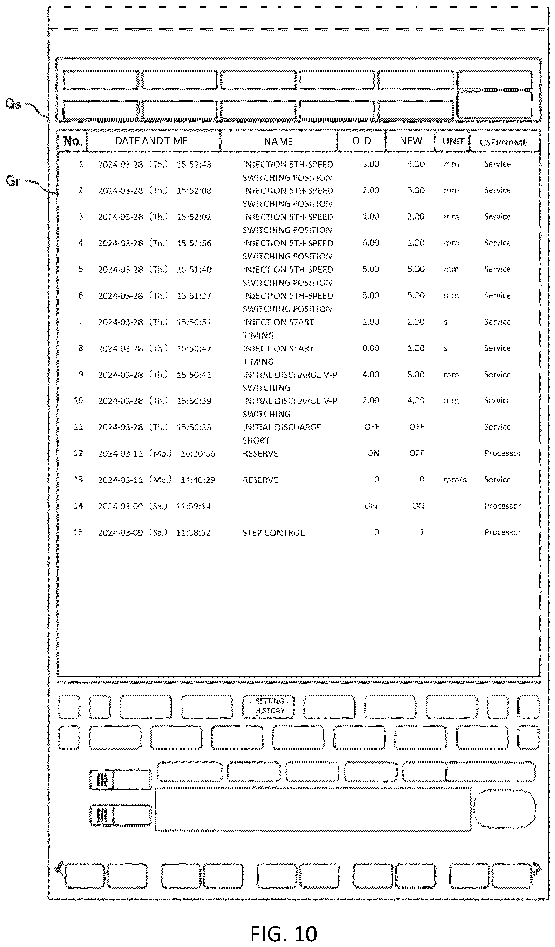

In the condition setting work, the operator inputs set values using a set screen displayed on a display device. In this situation, the operator sometimes prefers to set a new set value referring to set values in the past. In such a case, the operator is allowed to view the set values in the past using a list (setting history screen) of change information entities that is displayed on a display device and is related to a plurality of items included in the molding conditions. FIGs. 9 and 10 illustrate examples of a set screen Gs and a setting history screen Gr. In FIG. 10, illustration of the set screen Gs is partially omitted.

However, since the relatively large setting history screen Gr is displayed superimposed on the set screen Gs, the operator has to input a set value after viewing the set values in the past on the setting history screen Gr and then closing the setting history screen Gr to return to the set screen Gs. In addition, the change information entities related to the plurality of items included in the molding conditions are displayed in a column on the setting history screen Gr and thus the operator has to find the change information entity related to the item subjected to the setting from them. The condition setting work is thus complex.

In view of such a circumstance, one or more embodiments of the present disclosure provide a molding machine allowing change information entities related to items included in molding conditions to be readily viewed.

A molding machine according to the present invention includes: a storage device configured to store change information entities related to a plurality of items included in a molding condition; a display device configured to display a set screen for setting a set value to at least one item of the plurality of items; an input device configured to input an item selection operation to select one item from the items in the set screen displayed on the display device; and a control device configured to cause the display device to display a change information entity screen to display only the change information entity related to the item selected by the item selection operation superimposed on the set screen.

The present invention causes, when the item subjected to setting in the set screen is selected, the change information entity screen to display only the change information entity related to the item selected from the plurality of items included in the molding condition to be displayed superimposed on the set screen. Such a configuration allows, when a set value is set to an item included in the molding condition, a change information entity related to the item to be readily viewed.

### BRIEF DESCRIPTION OF THE DRAWINGS

FIG. 1 is a diagram illustrating a schematic configuration of an injection molding machine according to an embodiment of the present invention.
FIG. 2 is a functional block diagram of the injection molding machine.
FIG. 3 is a diagram illustrating an example of an identifying information entity table to be stored in a storage device of the injection molding machine.
FIG. 4 is a diagram illustrating an example of a change information entity table to be stored in the storage device of the injection molding machine.
FIG. 5 is a diagram illustrating first examples of an input screen and an item setting history screen to be displayed on a display device of the injection molding machine (when a change information entity display section is in a displayed state).
FIG. 6 is a diagram illustrating the first examples of the input screen and the item setting history screen to be displayed on the display device of the injection molding machine (when a change information entity display section is in a hidden state).
FIG. 7 is a diagram illustrating second examples of the input screen and the item setting history screen to be displayed on the display device of the injection molding machine.
FIG. 8 is a diagram illustrating third examples of the input screen and the item setting history screen to be displayed on the display device of the injection molding machine.
FIG. 9 is a diagram illustrating an example of a set screen to be displayed on the display device of the injection molding machine.
FIG. 10 is a diagram illustrating an example of a setting history screen to be displayed on the display device of the injection molding machine.

### DETAILED DESCRIPTION OF THE INVENTION

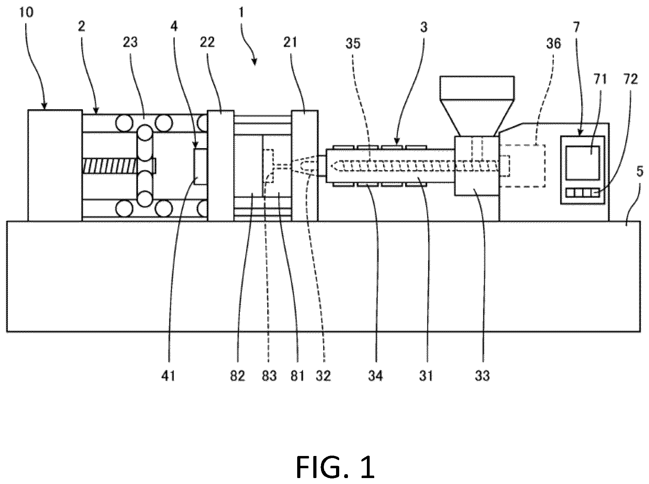

A description is given below to an injection molding machine according to one embodiment of the present invention with reference to FIGs. 1 through 10. The injection molding machine plasticizes a resin to be a material for molded articles and injects the material into a cavity in a mold for forming the molded articles.

As illustrated in FIG. 1, an injection molding machine 1 according to the present embodiment has a molding machine body 10 including a clamping device 2, an injection device 3, and an ejection device 4. The molding machine body 10 is arranged on a base 5. In addition, the injection molding machine 1 has a control unit 7 to control the molding machine body 10.

The clamping device 2 opens, closes, and clamps a fixed-side mold 81 and a movable-side mold 82. The fixed-side mold 81 and the movable-side mold 82 form a cavity 83.

The clamping device 2 has a fixed die plate 21, a movable die plate 22, and a clamp driving mechanism 23. To the fixed die plate 21, the fixed-side mold 81 is attached. To the movable die plate 22, the movable-side mold 82 is attached. The clamp driving mechanism 23 has, for example, an electric motor, a ball screw mechanism, and a toggle link mechanism. The clamp driving mechanism 23 causes the fixed die plate 21 and the movable die plate 22 to clamp the fixed-side mold 81 and the movable-side mold 82 in a front-back direction (left-right direction in FIG. 1) and thus generates a clamping force.

The injection device 3 has a cylinder 31, a nozzle 32, a resin supply section 33, a heater 34, a screw 35, and a screw driving mechanism 36.

The cylinder 31 has a cylindrical shape. The cylinder 31 is arranged along the front-back direction. The nozzle 32 is arranged at a distal end of the cylinder 31. The resin supply section 33 is arranged at a rear end of the cylinder 31. The resin supply section 33 has a hopper to store a powder or granular resin as a material for molded articles. The resin supply section 33 supplies the resin to the cylinder 31. The heater 34 is, for example, a band heater and is arranged on an outer circumferential surface of the cylinder 31. The screw 35 is stored in the cylinder 31 rotatably and movably to the front and back. The screw driving mechanism 36 has, for example, an electric motor and a ball screw mechanism. The screw driving mechanism 36 causes the screw 35 to rotate and move forward and backward.

The ejection device 4 has an ejector pin, not shown, and a projection mechanism 41. The projection mechanism 41 has, for example, an air cylinder. The projection mechanism 41 drives the ejector pin to remove a molded article from the movable-side mold 82.

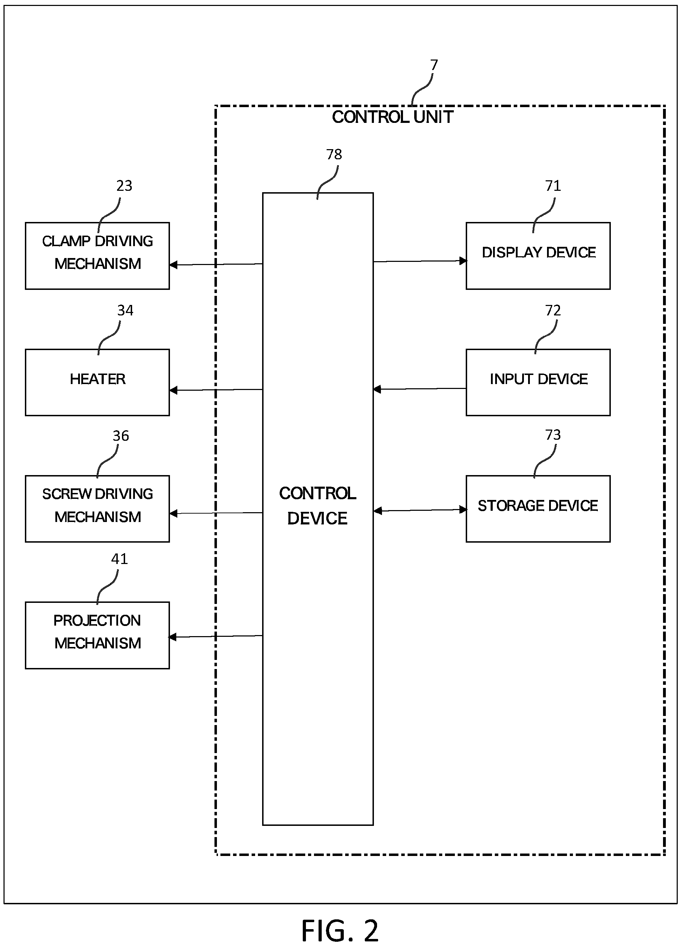

The control unit 7 manages the entire operation of the injection molding machine 1. As illustrated in FIG. 2, the control unit 7 has a display device 71, an input device 72, a storage device 73, and a control device 78.

The display device 71 is, for example, a flat panel display, such as a liquid crystal display.

The input device 72 is, for example, operation keys and a touchscreen. Such an operation key is, for example, a key of a hardware keyboard. Such a touchscreen is arranged superimposed on a display surface of the display device 71 to configure software keys in combination with button graphics, toggle switch graphics, and the like displayed on the display surface. Touching a spot corresponding to one of the button graphics or the toggle switch graphics on the touchscreen (tapping one of the graphics, etc.) is equivalent to operating one of the software keys, that is, inputting an operation to the input device 72.

The storage device 73 is, for example, a magnetic disk device, a non-volatile memory, or the like.

The storage device 73 stores molding conditions. The molding conditions include set values to be set to items (speed, pressure, temperature, time, moving distance, etc.) related to driving of the clamping device 2, the injection device 3, the ejection device 4, and the like of the injection molding machine 1.

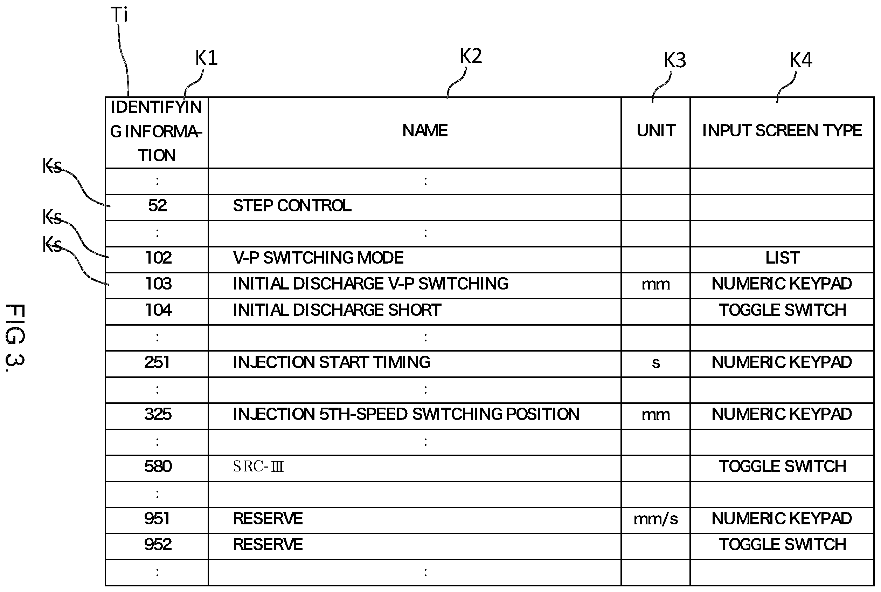

The storage device 73 also stores an identifying information entity table Ti. The identifying information entity table Ti includes an identifying information entity set Ks including identifying information entities, for identifying the plurality of items included in the molding conditions, and their related information entities. FIG. 3 illustrates an example of the identifying information entity table Ti including a plurality of identifying information entity sets Ks.

Each identifying information entity set Ks includes an identifying information entity K1, a name K2, a unit K3, and an input screen type K4. The identifying information entities K1 are pieces of information for identifying the plurality of items included in the molding conditions and items of various control information entities to be used in the control device 78. What is set to each identifying information entity K1 is a unique number (identification number) assigned to each item, what is set to each name K2 is a name of the item identified by the identification number set to the corresponding identifying information entity K1, what is set to each unit K3 is the unit of the set value of the item, and what is set to each input screen type K4 is the type of input screen to be used for input of the set value of the item. For the items with no units, the units K3 are left blank. To each input screen type K4, a "NUMERIC KEYPAD", a "TOGGLE SWITCH", or a "LIST" is set.

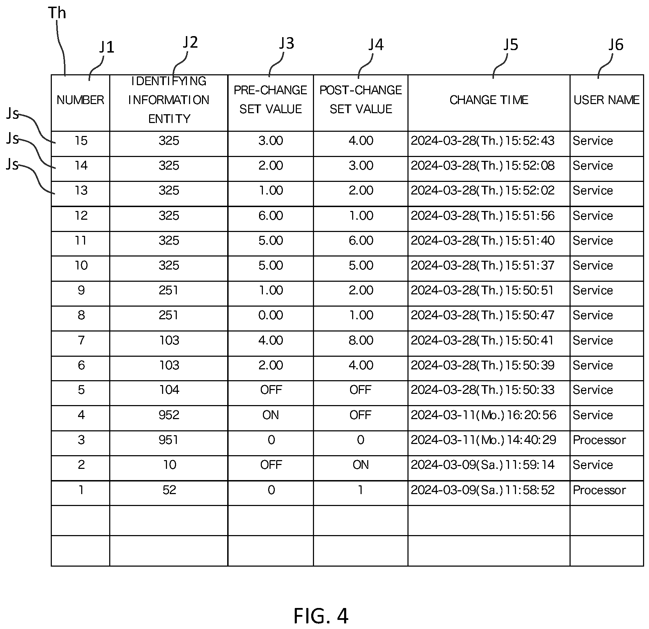

The storage device 73 also stores a change information entity table Th. The change information entity table Th includes a change information entity set Js related to the plurality of items included in the molding conditions. FIG. 4 illustrates an example of the change information entity table Th including a plurality of change information entity sets Js.

Each change information entity set Js includes a number J1, an identifying information entity J2, a pre-change set value J3, a post-change set value J4, a change time J5, and a username J6. The identifying information entities J2, the pre-change set values J3, the post-change set values J4, the change times J5, and the usernames J6 are all change information entities J.

What is set to each number J1 is a number indicating the order of adding the change information entity set Js to the change information entity table Th. What is set to each identifying information entity J2 is an identification number of the item related to the change information entity set Js. What is set to each pre-change set value J3 is the set value before change. What is set to each post-change set value J4 is a set value (new set value) after the change. What is set to each change time J5 is the date and time of changing the set value. What is set to each username J6 is a login username at the change time J5. The change information entity set Js may include the number of shots at the change time J5. The number of shots refers to the number of molding operations performed during a predetermined period in the injection molding machine 1. The number of shots is reset when, for example, the mold is replaced with a new one in the injection molding machine 1, molding of a molded article to be a final product is started, or the like.

The control device 78 has a computer. The control device 78 is communicably connected to the display device 71, the input device 72, and the storage device 73.

The control device 78 causes the display device 71 to display various kinds of information and operates in accordance with the operation input to the input device 72. It should be noted that the display device 71 and the input device 72 may be, for example, a tablet device, a laptop computer, or the like connected to the control device 78 by wireless communication.

The control device 78 is communicably connected to the clamp driving mechanism 23, the heater 34, the screw driving mechanism 36, and the projection mechanism 41. The control device 78 controls the clamp driving mechanism 23, the heater 34, the screw driving mechanism 36, the projection mechanism 41, and the like based on the molding conditions stored in the storage device 73 to perform the molding operations together with the molding machine body 10.

When a new set value is set to one of the items included in the molding conditions (i.e., when one of the set values is changed), the control device 78 generates a change information entity set Js related to the item and adds to the top (the topmost in FIG. 4) of the change information entity table Th. In the change information entity table Th illustrated in FIG. 4, the change information entity sets Js are aligned downward from the top so as to cause the change times J5 going back to the past. The change information entity table Th is capable of including, for example, ten thousand entities of the change information entities J. On a setting of a new set value to one of the items included in the molding conditions while the change information entity table Th is all filled up, the control device 78 overwrites the oldest change information entity set Js with the new change information entity set Js.

The control unit 7 has a plurality of set screens for setting the items included in the molding conditions. When a predetermined set screen display operation is input to the input device 72 by an operator, the control device 78 causes the display device 71 to display a set screen corresponding to the set screen display operation. FIG. 9 illustrates an example of a set screen Gs for setting a set value to one of the items related to injection and plasticization. The set screen Gs displays the current set values of the items related to the injection and plasticization. The items displayed on the set screen Gs are tied to the respective identification numbers.

On an input of an operation (item selection operation) to select one item from the plurality of items displayed on the set screen Gs to the input device 72 by the operator while the set screen Gs is displayed on the display device 71, the control device 78 causes an input screen, for inputting a set value to be set to the item (selected item X) selected by the item selection operation, and an item setting history screen to be displayed superimposed on the set screen Gs.

Specifically, when the item selection operation is input, the control device 78 obtains the identification number of the selected item X to specify the identifying information entity set Ks including the identifying information entity K1 to which the identification number of the selected item X is set in the identifying information entity table Ti. The control device 78 then obtains the name K2 of the specified identifying information entity set Ks as the name of the selected item X and obtains the unit K3 as the unit of the selected item X to cause the input screen in accordance with the input screen type K4 to be displayed. At the same time, the control device 78 causes the item setting history screen, displaying the change information entities J related to the selected item X, to be displayed in alignment with the input screen.

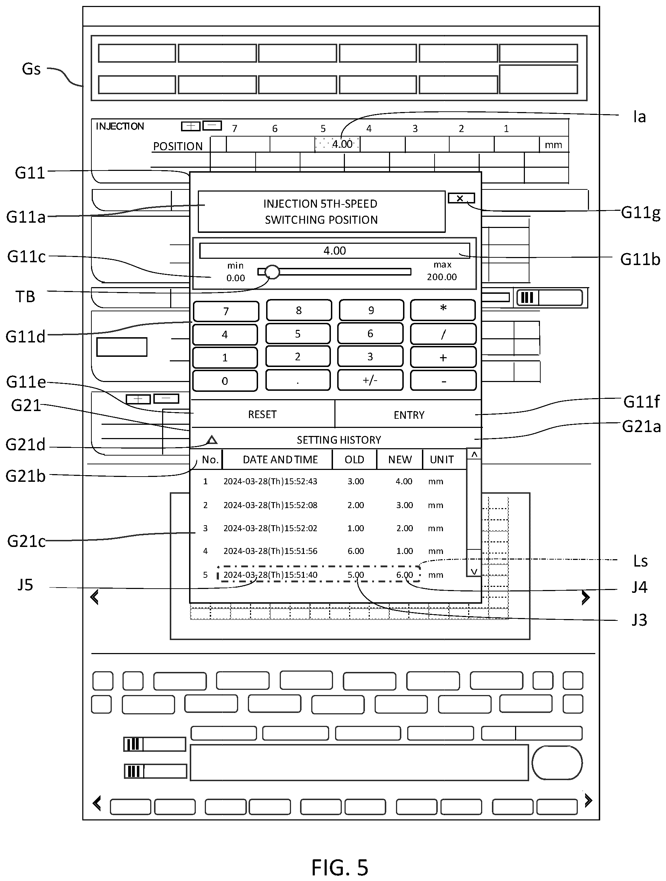

A description is then given to the input screens and the item setting history screens with reference to FIGs. 5 through 9. In FIGs. 5 through 8, illustration of the respective set screens Gs is partially omitted.

The set screen Gs includes an area (item la) to display, for example, the set value of an "INJECTION 5TH-SPEED SWITCHING POSITION" (FIG. 9). The item la is tied to an identification number ("325"). Then, when an operation (item selection operation) of tapping the item la is input to the input device 72, the control device 78 obtains the identification number tied to the item la as the identification number of the selected item X. The control device 78 obtains the "INJECTION 5TH-SPEED SWITCHING POSITION" as the name of the selected item X, from the identifying information entity table Ti based on the identification number, obtains "mm" as the unit of the selected item X, and obtains the "NUMERIC KEYPAD" as the type of input screen. Then, as illustrated in FIG. 5, the control device 78 causes the display device 71 to display an input screen G11 and an item setting history screen G21 superimposed on the set screen Gs. The input screen G11 is of the "NUMERIC KEYPAD" type.

The input screen G11 has a title section G11a, a display section G11b, a slider section G11c, a numeric keypad section G11d, a reset button G11e, an enter button G11f, and a close button G11g.

The control device 78 causes the name of the selected item X to be displayed in the title section G11a. When the input screen G11 is displayed, the control device 78 reads the current set value of the selected item X from the storage device 73 to be displayed in the display section G11b.

The slider section G11c has a slider TB. When the input screen G11 is displayed, the control device 78 causes the slider TB to move to the position corresponding to the current set value of the selected item X. The control device 78 causes the numerical value of the display section G11b to be reduced when an operation of sliding the slider TB to the left is input to the input device 72, and causes the numerical value of the display section G11b to be increased when an operation of sliding the slider TB to the right is input to the input device 72.

The numeric keypad section G11d includes numeric keys ("0" through "9", ".") and symbol keys ("*", "/", "+", "-", "+/-") with the same functions as those of general electronic calculators. When an operation of tapping any of the numeric keys is input to the input device 72, the control device 78 causes the numerical value corresponding to the numeric key to be displayed in the display section G11b. When an operation of tapping any of the symbol keys is input to the input device 72, the control device 78 performs processing for calculating a mathematical expression including the symbol for mathematical operations corresponding to the symbol key.

When an operation of tapping the reset button G11e is input to the input device 72 after the operation of the slider section G11c or the numeric keypad section G11d, the control device 78 causes the numerical value of the display section G11b to return to the current set value (set value immediately before displaying the input screen G11) of the selected item X and the slider TB to return to the position corresponding to the current set value of the selected item X.

When an operation of tapping the enter button G11f is input to the input device 72, the control device 78 (i) calculates, if the numerical value of the display section G11b represents a calculation in progress, the calculation result to be displayed in the display section G11b (equivalent to an "=" button in electronic calculators) and (ii) causes, if the numerical value of the display section G11b does not represent a calculation in progress, the numerical value to be stored in the storage device 73 as the set value and causes the input screen G11 to be closed. Likewise, when an operation of tapping the close button G11g is input to the input device 72, the control device 78 causes the input screen G11 to be closed.

The item setting history screen G21 has a title section G21a, a change information entity name section G21b, a change information entity display section G21c, and a display/hide button G21d.

The control device 78 causes a "SETTING HISTORY" to be displayed in the title section G21a and causes a "No.", a "DATE AND TIME", "OLD", "NEW", and a "UNIT" to be displayed in the change information entity name section G21b from left to right in order.

The control device 78 causes the change information entities J related to the selected item X to be displayed in the change information entity display section G21c. Specifically, the control device 78 extracts the change information entity sets Js including the identifying information entity J2 to which the identification number of the selected item X is set from the change information entity table Th. The control device 78 causes display information entity sets Ls to be displayed in the change information entity display section G21c, each display information entity set Ls having the change time J5, the pre-change set value J3, and the post-change set value J4 of the corresponding change information entity set Js thus extracted in a column from left to right in order. In FIG. 5, although one of the display information entity sets Ls is surrounded by a dash-dotted ellipse for the convenience of description, the ellipse is not actually displayed. In the change information entity display section G21c, the change times J5, the pre-change set values J3, and the post-change set values J4 are arranged in correspondence with the "DATE AND TIME", the "OLD", and the "NEW" in the change information entity name section G21b. In addition, the control device 78 causes the respective display information entity sets Ls to be displayed in downward alignment in order of newer change times J5 from the top. The change information entity display section G21c is equivalent to a change information entity screen to display only the change information entities J related to the selected item X among the plurality of items included in the molding conditions. It should be noted that "to display only the change information entities J related to the selected item X among the plurality of items included in the molding conditions" means to display only the change information entities J related to the selected item X as the change information entities J without displaying the change information entities J related to the items other than the selected item X among the plurality of items included in the molding conditions.

The control device 78 attaches numbers to the respective display information entity sets Ls on the left in an ascending order from the newer change times J5 for display, and causes the units of the selected item X to be displayed on the right of the respective display information entity sets Ls. In the change information entity display section G21c, the numbers are arranged in correspondence with the "No." of the change information entity name section G21b, and the units of the selected item X are arranged in correspondence with the "UNIT" of the change information entity name section G21b.

It should be noted that, when an operation (change information entity selection operation) of tapping one of the display information entity sets Ls displayed in the change information entity display section G21c is input to the input device 72, the control device 78 may be configured to determine the tapped display information entity set Ls as the selected one to cause the pre-change set value J3 included in the display information entity set Ls to be displayed in the display section G11b (i.e., to be a candidate for the set value of the selected item X) or to set the pre-change set value J3 included in the display information entity set Ls as the set value of the selected item X (to store the pre-change set value J3 in the storage device 73). Such a configuration allows the operator to set one of the set values in the past to the selected item X by a relatively simple operation.

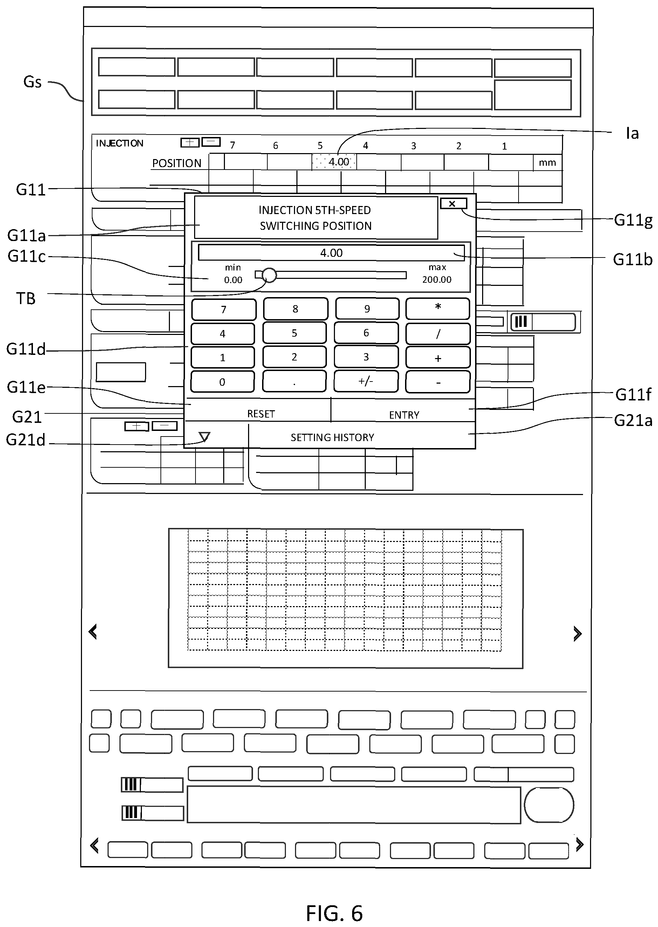

The display/hide button G21d is arranged in the title section G21a. The display/hide button G21d is a toggle switch to switch the display/hide state of the change information entity name section G21b and the change information entity display section G21c. While the change information entity name section G21b and the change information entity display section G21c are displayed, the control device 78 causes an upward triangle graphic to be displayed as the display/hide button G21d (FIG. 5). When an operation (screen hiding operation) of tapping the upward triangle graphic is input to the input device 72, the control device 78 causes the change information entity name section G21b and the change information entity display section G21c to be closed and causes a downward triangle graphic to be displayed as the display/hide button G21d (FIG. 6). When an operation (screen display operation) of tapping the downward triangle graphic is input to the input device 72, the control device 78 causes the change information entity name section G21b and the change information entity display section G21c to be displayed and causes the upward triangle graphic to be displayed as the display/hide button G21d.

When the input screen G11 is closed, the control device 78 causes the item setting history screen G21 to be closed at the same time.

It should be noted that, when an operation (screen movement operation) of dragging the title section G11a of the input screen G11 is input to the input device 72, the control device 78 may be configured to cause only the input screen G11 or both the input screen G11 and the item setting history screen G21 to move on the set screen Gs in accordance with the operation. In addition, for example, when an operation (screen movement operation) of dragging the title section G21a of the item setting history screen G21 is input to the input device 72, the control device 78 may be configured to cause only the item setting history screen G21 or both the input screen G11 and the item setting history screen G21 to move on the set screen Gs in accordance with the operation. Such a configuration allows the operator to move the input screen G11 or the item setting history screen G21 and to visually recognize the areas in the set screen Gs hidden by these screens.

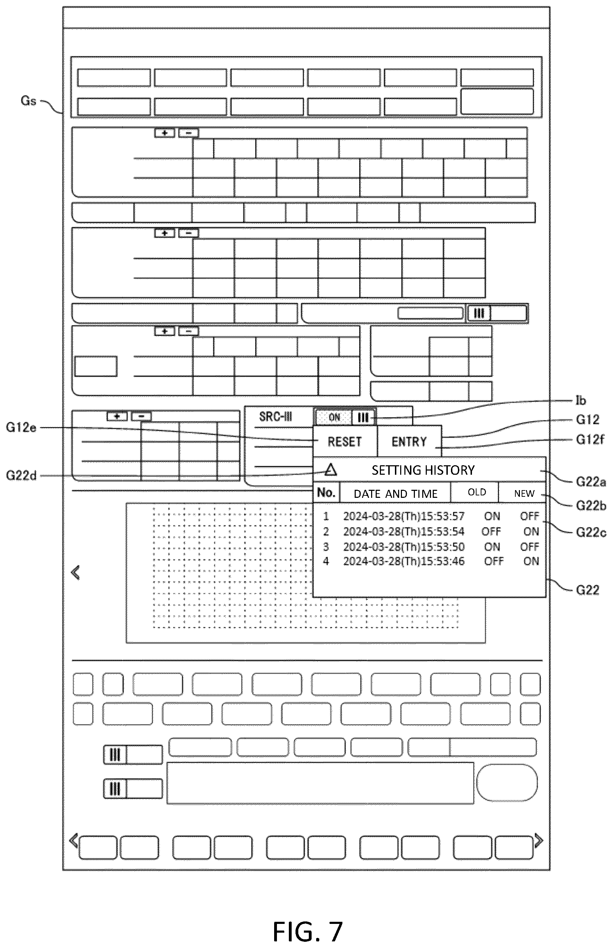

The set screen Gs includes a toggle switch graphic (item Ib) for inputting, for example, a set value of an "SRC-III" (FIG. 9). The item Ib is tied to an identification number ("580"). Then, when an operation (item selection operation) of tapping the item Ib is input to the input device 72, the control device 78 obtains the identification number tied to the item Ib as the identification number of the selected item X. The control device 78 obtains the "SRC-III" as the name of the selected item X, from the identifying information entity table Ti based on the identification number and obtains the "TOGGLE SWITCH" as the type of input screen. Then, as illustrated in FIG. 7, the control device 78 causes the display device 71 to display an input screen G12 and an item setting history screen G22 superimposed on the set screen Gs. The input screen G12 is of the "TOGGLE SWITCH" type.

Every time an operation of tapping the item Ib is input to the input device 72 while the input screen G12 is displayed on the display device 71, the control device 78 causes the toggle switch graphic related to the item Ib to be alternately switched between a graphic in an ON state (FIG. 7) and a graphic in an OFF state (FIG. 9).

The input screen G12 has a reset button G12e and an enter button G12f.

When an operation of tapping the reset button G12e is input to the input device 72, the control device 78 causes the toggle switch graphic related to the item Ib to be in the state immediately before the input screen G12 is displayed.

When an operation of tapping the enter button G12f is input to the input device 72, the control device 78 causes the set value in accordance with the state of the toggle switch graphic (ON state, OFF state) to be stored in the storage device 73 and causes the input screen G12 to be closed. It should be noted that the control device 78 may cause the input screen G12 to be closed on an input of an operation of tapping an arbitrary spot in the set screen Gs to the input device 72 while the input screen G12 is displayed.

The item setting history screen G22 has a title section G22a, a change information entity name section G22b, a change information entity display section G22c, and a display/hide button G22d. The item setting history screen G22 is the same (including substantially the same) as the item setting history screen G21 except for not displaying information entities related to the unit of the selected item X in the change information entity name section G22b and the change information entity display section G22c, and thus a detailed description of the item setting history screen G22 is omitted.

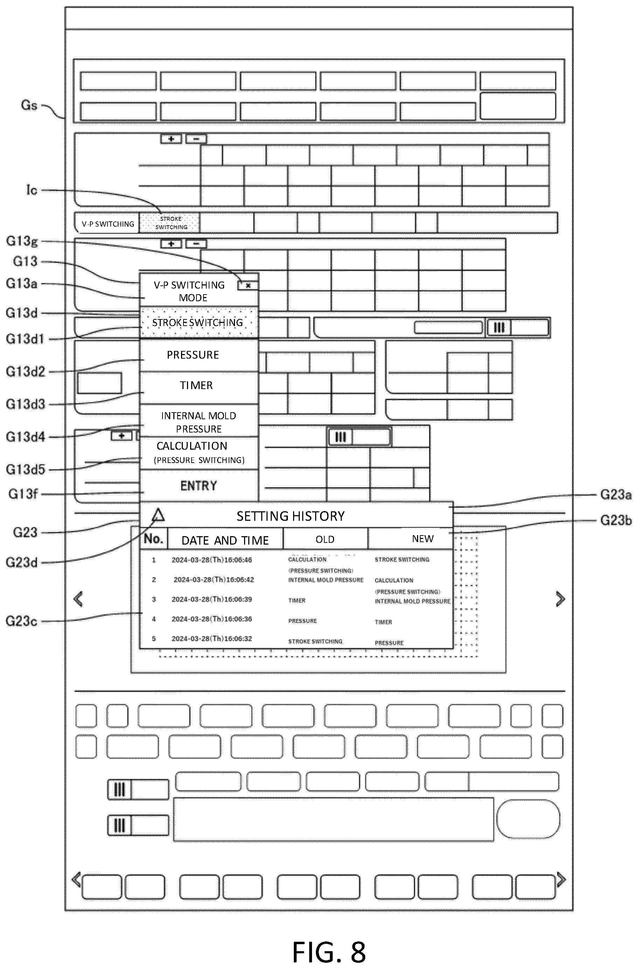

The set screen Gs includes an area (item Ic) to display, for example, the set value of a "V-P SWITCHING MODE" (FIG. 9). The item Ic is tied to an identification number ("102"). Then, when an operation (item selection operation) of tapping the item Ic is input to the input device 72, the control device 78 obtains the identification number tied to the item Ic as the identification number of the selected item X. The control device 78 obtains the "V-P SWITCHING MODE" as the name of the selected item X, from the identifying information entity table Ti based on the identification number and obtains the "LIST" as the type of input screen. Then, as illustrated in FIG. 8, the control device 78 causes the display device 71 to display an input screen G13 and an item setting history screen G23 superimposed on the set screen Gs. The input screen G13 is of the "LIST" type.

The input screen G13 has a title section G13a, a list section G13d, an enter button G13f, and a close button G13g.

The control device 78 causes the name of the selected item X to be displayed in the title section G13a. The control device 78 causes a plurality of selection buttons G13d1 through G13d5 to be displayed in the list section G13d. The plurality of selection buttons G13d1 through G13d5 correspond to set values settable to the selected item X. In the input screen G13, the plurality of selection buttons G13d1 through G13d5 correspond to "STROKE SWITCHING", a "PRESSURE", a "TIMER", an "INTERNAL MOLD PRESSURE", and "CALCULATION (PRESSURE SWITCHING)". When the input screen G13 is displayed, the control device 78 reads the current set value of the selected item X from the storage device 73 and causes the setting button corresponding to the current set value, among the plurality of selection buttons G13d1 through G13d5, to be highlighted. In addition, when an operation of tapping one selection button of the plurality of selection buttons G13d1 through G13d5 is input to the input device 72, the control device 78 causes the selection button selected by the operation to be highlighted.

When an operation of tapping the enter button G13f is input to the input device 72, the control device 78 causes the set value corresponding to the highlighted selection button to be stored in the storage device 73 and causes the input screen G13 to be closed. Likewise, when an operation of tapping the close button G13g is input to the input device 72, the control device 78 causes the input screen G13 to be closed.

The item setting history screen G23 has a title section G23a, a change information entity name section G23b, a change information entity display section G23c, and a display/hide button G23d. The item setting history screen G23 is the same (including substantially the same) as the item setting history screen G21 except for not displaying information entities 0related to the unit of the selected item X in the change information entity name section G23b and the change information entity display section G23c, and thus a detailed description of the item setting history screen G23 is omitted.

As just described, the injection molding machine 1 has the molding machine body 10 to form molded articles and the control unit 7. The control unit 7 has the storage device 73 to store the change information entities J related to the plurality of items included in the molding conditions, the display device 71 to display any of the set screens Gs for setting a set value to one of the items included in the molding conditions, the input device 72 to input the item selection operation to select one item from the items in the set screen Gs displayed on the display device 71, and the control device 78 to cause the display device 71 to display the item setting history screen G21 superimposed on the set screen Gs where the item setting history screen G21 includes the change information entity display section G21c to display only the change information entities J related to the item (selected item X) selected by the item selection operation. Such a configuration allows the operator, for setting a set value to one of the items included in the molding conditions, to readily view the change information entities J related to the item.

In addition, the control device 78 causes the display device 71 to display the input screen G11, for inputting a set value to be set to the selected item X, together with the item setting history screen G21 superimposed on the set screen Gs. Such a configuration allows the operator to input a set value while viewing the set values in the past displayed on the item setting history screen G21.

Still in addition, on an input of an operation (screen hiding operation) of tapping the display/hide button G21d of the item setting history screen G21 to the input device 72 while the input screen G11 and the item setting history screen G21 are displayed on the display device 71, the control device 78 causes the input screen G11 to be continuously displayed and causes the change information entity display section G21c of the item setting history screen G21 to be hidden. On an input of an operation (screen display operation) of tapping the display/hide button G21d to the input device 72 while the input screen G11 is displayed on the display device 71 and the change information entity display section G21c of the item setting history screen G21 is not displayed on the display device 71, the control device 78 causes the display device 71 to display the change information entity display section G21c. Such a configuration allows the operator, if necessary, to reduce the size of the item setting history screen G21 and to extend the visible area of the set screen Gs.

Still in addition, each of the change information entities J stored in the storage device 73 includes the identifying information entity J2 of the item related to the change information entity J, the pre-change set value J3 as the set value before change, the post-change set value J4 as the set value after change, and the change time J5 as the time of setting the set value after change to the item. The change information entities J to be displayed in the change information entity display section G21c of the item setting history screen G21 are the pre-change set values J3, the post-change set values J4, and the change times J5. The change information entities J to be displayed in the change information entity display section G21c may include at least the pre-change set values J3. Such a configuration allows the operator to view the set values in the past that have been set before the current set value.

Still in addition, in the change information entity display section G21c of the item setting history screen G21, the plurality of change information entities J are displayed in order of the change times J5. Such a configuration allows chronological checking of the set values in the past of the selected item X.

Although the injection molding machine according to one embodiment of the present invention has been described herein, the present invention is not limited to the injection molding machine. Embodiments of the present invention are also applicable to other kinds of molding machine, such as a die casting machine.

The above description has been given to some embodiments of the present invention, but embodiments of the present invention are not limited to these examples. The scope of the present invention also includes the embodiments described above appropriately subjected to addition, cancellation, design change of any of the components by those skilled in the art and appropriate combinations of the features of the embodiments as long as not departing from the spirit of the present invention.

## Claims

1. A molding machine, comprising:
a storage device configured to store change information entities related to a plurality of items included in a molding condition;
a display device configured to display a set screen for setting a set value to at least one item of the plurality of items;
an input device configured to input an item selection operation to select one item from the items in the set screen displayed on the display device; and
a control device configured to cause the display device to display a change information entity screen to display only the change information entity related to the item selected by the item selection operation superimposed on the set screen.

2. The molding machine according to Claim 1, wherein the control device causes the display device to display an input screen for inputting the set value to be set to the item selected by the item selection operation superimposed on the set screen together with the change information entity screen.

3. The molding machine according to Claim 2, wherein the control device
causes the input screen to be continuously displayed and causes the change information entity screen to be hidden on an input of a screen hiding operation to the input device while the input screen and the change information entity screen are displayed on the display device, and
causes the display device to display the input screen and the change information entity screen on an input of a screen display operation to the input device while the input screen is displayed on the display device and the change information entity screen is not displayed on the display device.

4. The molding machine according to Claim 1, wherein each change information entity to be stored in the storage device includes an identifying information entity of the item related to the change information entity, a pre-change set value as the set value before change, a post-change set value as the set value after change, and a change time as time of setting the set value after change to the item, and
each change information entity to be displayed on the change information entity screen includes at least the pre-change set value.

5. The molding machine according to Claim 4, wherein a plurality of the change information entities are displayed in order of the change time on the change information entity screen.

6. The molding machine according to Claim 4 or 5, wherein, on an input of a change information entity selection operation to select the change information entity displayed on the change information entity screen to the input device, the control device causes the pre-change set value included in the change information entity selected by the change information entity selection operation (i) to be a candidate for a new set value of the item related to the change information entity, or (ii) to be set to the item related to the change information entity as a new set value.

7. The molding machine according to Claim 1, wherein, on an input of a screen movement operation to the input device, the control device causes the change information entity screen to move on the set screen in accordance with the screen movement operation.
